# EUROPEAN PATENT SPECIFICATION

(11) **EP 2 239 519 B1**
(45) Date of publication and mention of the grant of the patent: **06.04.2016**
(21) Application number: 09708548.4
(22) Date of filing: 06.02.2009
(51) Int. Cl.: F24F 11/02, F24F 11/00, H04L 29/12

(54) **AIR CONDITIONING SYSTEM AND ADDRESS SETTING METHOD**
KLIMATISIERUNGSSYSTEM UND ADRESSENEINSTELLVERFAHREN DAFÜR
SYSTÈME DE CONDITIONNEMENT D'AIR ET PROCÉDÉ D'ÉTABLISSEMENT D'ADRESSE

(30) Priority: 08.02.2008 JP 2008029290
(43) Date of publication of application: 13.10.2010
(73) Proprietor: Mitsubishi Heavy Industries, Ltd., Tokyo 108-8215 (JP)
(72) Inventor: YOKOHAMA, Koji, Nagoya-shi Aichi 453-8515 (JP); HIRAMATU, Seiji, Kiyosu-shi Aichi 452-8561 (JP); HIRATA, Satoshi, Kiyosu-shi Aichi 452-8561 (JP); INABA, Takashi, Kiyosu-shi Aichi 452-8561 (JP)
(74) Representative: Intès, Didier Gérard André
(86) International application number: PCT/JP2009/052090
(87) International publication number: WO 2009/099203

(56) References cited:
- EP-A2- 1 130 333
- EP-A2- 1 321 722
- JP-A- 2000 088 321
- JP-A- 2000 161 755
- JP-A- 2004 077 018
- JP-A- 2007 240 084
- JP-A- 2007 315 635
- JP-B2- 2 566 323

## Description

### Technical Field

The present invention relates to an air conditioning system that centrally controls the operation of multi-type air conditioners and to an address setting method thereof.

### Background Art

Conventionally, an air conditioning system that centrally controls the operation of multi-type air conditioners installed in a building or a factory is known. The multi-type air conditioner includes one outdoor unit and a plurality of indoor units, which are connected to a common refrigerant pipe. A plurality of such multi-type air conditioners are installed in a building or a factory, according to necessity. The outdoor unit and indoor units constituting the multi-type air conditioner, as well as a central control unit, such as a host computer, that centrally controls these units, are connected to a common communication network so as to be capable of communicating with each other. In such an air conditioning system, in order for the central control unit to identify an indoor unit, a method in which a number generated by combining an outdoor unit number and an indoor unit number is automatically set as the address of the indoor unit is known (for example, see Patent Citation 1).

Patent Citation 1: the Publication of Japanese Patent No. 2566323
Moreover EP1130333 (A2) discloses a refrigerating/air-conditioning apparatus including operating/controlling units such as outdoor units, indoor units and control devices for individually or collectively controlling the driving of the outdoor units and the indoor units.
Furthermore JP2000161755 (A) refers to a method for setting addresses of air conditioners of an air-conditioning system.

### Disclosure of Invention

When a plurality of outdoor units are installed in a large building, the total number of indoor units is enormous. In such a case, in order for a central control unit to centrally control all indoor units, the locations of the indoor units in the building need to be identified. During this process, in order for the central control unit to confirm the connection of all the indoor units, a method for setting the address of an indoor unit disclosed in Patent Citation 1 requires searching an address space of a number equal to the product of the total number of outdoor units and the total number of indoor units. This causes an inconvenience that such processing requires great time and effort.

The present invention has been made to solve the above-described problems, and an object thereof is to provide an air conditioning system and address setting method that can reduce the range over which the addresses of the indoor units are searched, when the operation of a plurality of multi-type air conditioners is centrally controlled.

The invention refers to an air conditioning system according to claim 1 and an address setting method according to claim 5.

To solve the above-described problems, the present invention employs the following solutions.

The present invention employs an air conditioning system that includes a plurality of air conditioners each including an outdoor unit and at least one indoor unit connected to the outdoor unit through a refrigerant pipe, and a central control unit capable of centrally controlling all the indoor units of the plurality of the air conditioners. Unique addresses are set in all the indoor units controlled by the central control unit.

In the air conditioning system of the present invention, an address associated with the outdoor unit, for example, a combination of an outdoor unit number and an indoor unit number, is not allocated to each indoor unit, but an unique address independent of the outdoor unit is allocated to every indoor unit. Thus, the range over which the central control unit searches for the addresses of the indoor units can be reduced, and the processing load during a search for a specific indoor unit can be reduced.

The above-described air conditioning system of the present invention may be configured such that each outdoor unit has an address start code set therein which will be given to the indoor unit connected thereto, and such that an unique address that starts with the address start code set in the outdoor unit is allocated to the indoor unit connected to the outdoor unit in accordance with a certain rule.

In this configuration, an unique address that starts with the address start code set in the outdoor unit is allocated to each indoor unit in accordance with a certain rule. Thus, the central control unit can easily search for a specific indoor unit.

The above-described air conditioning system of the present invention may be configured such that the number of indoor units connected to each outdoor unit is set in the outdoor unit, and such that the unique address is determined on the basis of the address start code and the number of connected units.

In this configuration, by determining the address of the indoor unit on the basis of the address start code and the number of connected units, overlap of the addresses of the indoor units can be prevented.

The above-described air conditioning system of the present invention may be configured such that the unique address is a serial number.

In this configuration, by making the addresses of indoor units serial numbers, the range over which the central control unit searches for the addresses of the indoor units can be further reduced. Thus, the processing load of the central control unit can be further reduced. Note that the serial numbers are not necessarily continuous and may be allocated in accordance with a certain rule, such as 01, 03, and 05.

The above-described air conditioning system of the present invention may be configured such that polarity-adjustment processing is performed on the indoor unit, the outdoor unit, and the central control unit after the unique addresses are set.

In this configuration, by performing the polarity-adjustment processing to make the indoor units, the outdoor units, and the central control unit have the same polarity after the unique addresses are set, the central control unit becomes capable of controlling all the indoor units.

The present invention employs an address setting method for setting addresses of indoor units in an air conditioning system that controls a plurality of indoor units connected to each of a plurality of outdoor units with a common central control unit. Unique addresses are set in all the indoor units controlled by the common central control unit.

With the address setting method of the present invention, every indoor unit can be controlled by the central control unit on the basis of the unique address allocated thereto. Because this can reduce the range over which the addresses of the indoor units are searched, the processing load of the central control unit can be reduced.

The present invention provides an advantage in that the range over which the addresses of the indoor units are searched can be reduced when the operation of a plurality of multi-type air conditioners is centrally controlled.

### Brief Description of Drawings

[FIG. 1] FIG. 1 is a diagram schematically showing the configuration of an air conditioning system according to an embodiment of the present invention.
[FIG. 2] FIG. 2 is a flowchart showing processing steps of an address setting method according to an embodiment of the present invention.
[FIG. 3] FIG. 3 is a flowchart showing a procedure for determining temporary addresses.
[FIG. 4] FIG. 4 is a flowchart showing a procedure for determining permanent addresses.
[FIG. 5] FIG. 5 is a flowchart showing a procedure for registering to an outdoor unit.

### Explanation of Reference:

1, 2, 3: outdoor unit
5: central control unit
10, 20, 30, 50: communication cable
11, 12, 13, 21, 22, 23, 31, 32, 33: indoor unit
18, 28, 38: multi-type air conditioner
100: air conditioning system

### Best Mode for Carrying Out the Invention

An embodiment of an air conditioning system and address setting method according to the present invention will be described below with reference to the drawings.

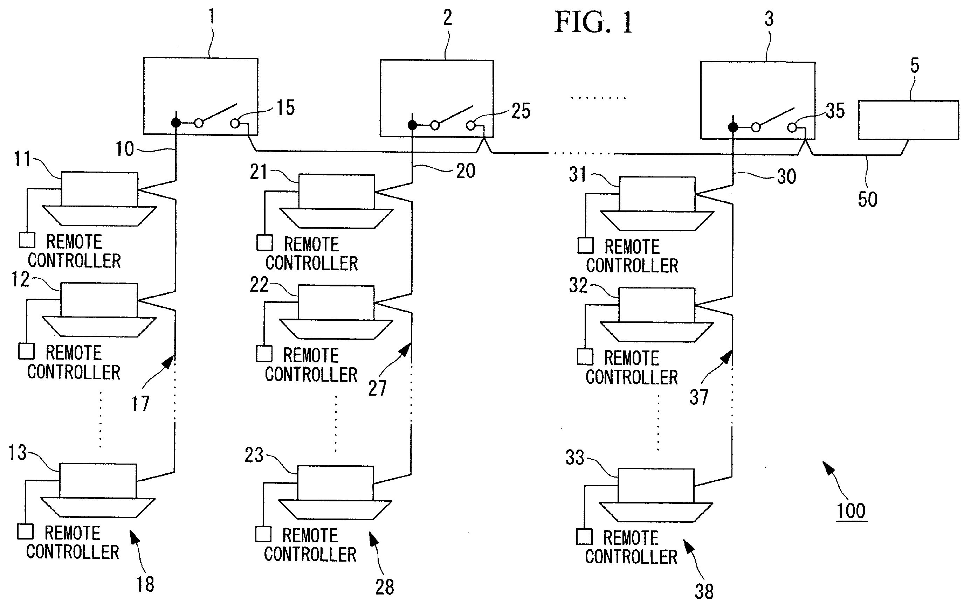

FIG. 1 schematically shows the configuration of an air conditioning system according to this embodiment.

As shown in FIG. 1, an air conditioning system 100 includes a central control unit 5 and a plurality of multi-type air conditioners 18, 28, and 38. The multi-type air conditioners 18, 28, and 38 each include a plurality of indoor units and one outdoor unit that are connected to a common refrigerant pipe. In this embodiment, an outdoor unit 1 is connected to indoor units 11, 12, and 13, an outdoor unit 2 is connected to indoor units 21, 22, and 23, and an outdoor unit 3 is connected to indoor units 31, 32, and 33, through refrigerant pipes. Herein, a case where three indoor units are connected to each outdoor unit is assumed. However, the number of indoor units that can be connected to each outdoor unit is set in advance in accordance with the capacity of the outdoor unit, and the number of indoor units is not limited as long as it is within this range.

Communication cables 10, 20, and 30 respectively connect the outdoor units 1, 2, and 3 to the indoor units, forming refrigerant system networks 17, 27, and 37. In addition, the refrigerant system networks 17, 27, and 37 are connected to the central control unit 5 via switches 15, 25, and 35, respectively, through the communication cable 50. In the thus-formed networks of the air conditioning system 100, the refrigerant system networks are connected to or isolated from the central control unit 5 by operating the switches 15, 25, and 35.

In each of the outdoor units 1, 2, and 3, an address start code given to the indoor units connected thereto and the number of indoor units connected thereto are set. The address start codes are non-overlapping codes. More specifically, three-digit numbers, such as 001, are used. An address start code may be automatically set in each outdoor unit by setting the number of indoor units connected to each outdoor unit in advance.

An unique address that starts with the address start code set in the outdoor units 1, 2, and 3, is allocated to each indoor unit, in accordance with a certain rule. Herein, the address start code is not limited to numerals, but may be another expression, such as symbols or letters, as long as it can identify objects.

Examples of unique addresses include serial numbers. In this case, for example, assuming that the address start code of the outdoor unit 1 is set to 001, the address start code of the outdoor unit 2 is set to 004, and the address start code of the outdoor unit 3 is set to 007, the addresses of the indoor units 11, 12, and 13 are set to 001, 002, and 003, respectively, the addresses of the indoor units 21, 22, and 23 are set to 004, 005, and 006, respectively, and the addresses of the indoor units 31, 32, and 33 are set to 007, 008, and 009, respectively. By making the addresses of all the indoor units serial numbers, the range of addresses set in all the indoor units can be reduced.

Note that the serial numbers are not necessarily continuous, and, for example, they may be numbers set in accordance with a certain rule, such as 1, 3, and 5. Such a certain rule may be regular numbers, such as continuous numbers or every second number, as mentioned above, and also includes an irregular case where numbers are set at random within a predetermined numerical range.

The indoor units are made to have the same polarities by performing known polarity-adjustment processing disclosed in, for example, the Publication of Japanese Patent No. 2566323. More specifically, an indoor unit that later joins the network adjusts its own polarity by detecting the polarity of the network having been already determined. That is, an algorithm is employed such that the indoor units behave as master controllers, which determine the polarity based on their own decision and determine the polarity of the network, if there are no controllers (the indoor units, the outdoor units, and the central control unit) whose polarities have already been determined and, hence, the polarity of the network has not yet been determined, just as, for example, when the power is first turned on. This allows the central control unit 5 to control all the indoor units.

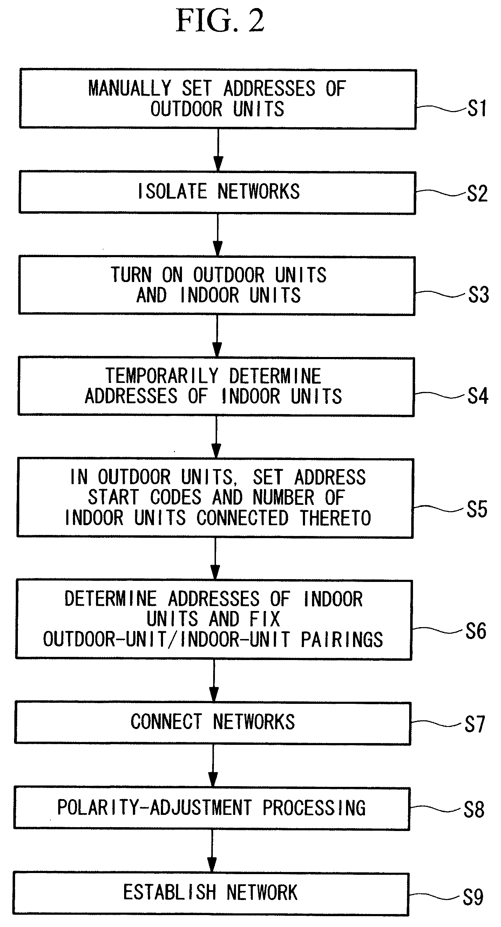

Next, the overall processing of the address setting method for the air conditioning system 100, having the above-described configuration, will be described using a flowchart shown in FIG. 2.

First, a user manually sets the addresses of outdoor units (S1) and opens switches to isolate the refrigerant system networks from the central control unit (S2). In this state, the outdoor units and the indoor units are turned on (S3). Thus, after polarity-adjustment processing is performed on each refrigerant system network, the addresses of the indoor units are temporarily determined (S4).

Next, in the outdoor units, address start codes and the number of indoor units connected thereto are set (S5). Then, an address is allocated to each indoor unit, and outdoor-unit/indoor-unit pairings are fixed (S6). Thus, to each indoor unit, an address independent of the outdoor unit to which the indoor unit is connected is allocated. In other words, to all the indoor units controlled by the common central control unit, addresses are allocated in accordance with a certain rule.

Next, the switches are closed to connect the refrigerant system networks to the central control unit (S7). Then, by performing polarity-adjustment processing on the indoor units, the outdoor units, and the central control unit (S8), a network is established so as to enable communication with all the indoor units (S9).

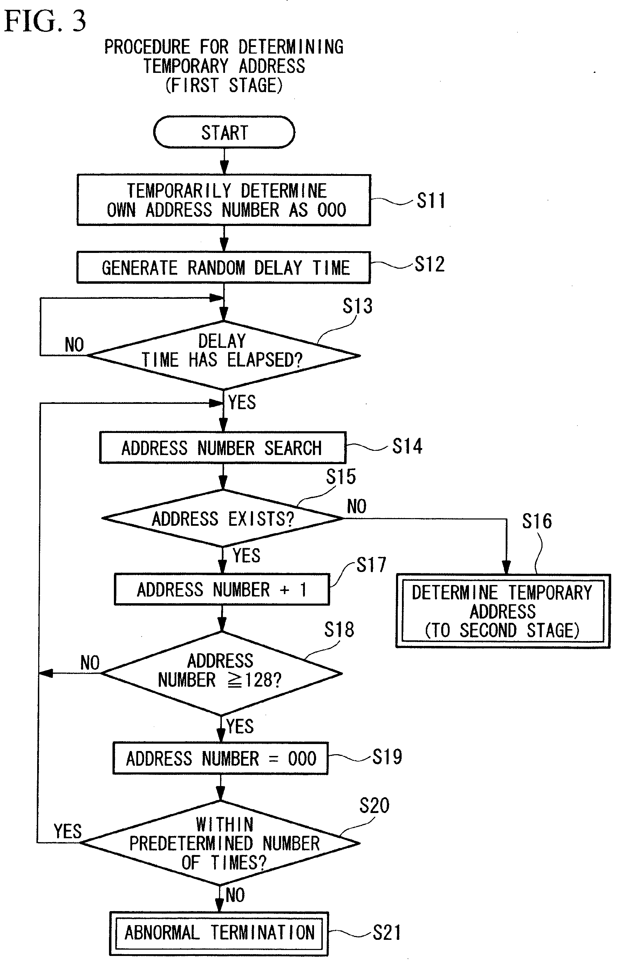

Next, detailed processing performed at the time of determining the address of each indoor unit, described above, will be described below using flowcharts shown in FIGs. 3 to 5 and by providing concrete examples.

FIG. 3 shows, as a first stage, a procedure for determining a temporary address of each indoor unit.

As shown in FIG. 3, when each indoor unit is turned on, the own address number of each indoor unit is temporarily determined to be 000 (S11). Then, a delay time set at random for each indoor unit is generated (S12). When the delay time has elapsed (S13), search for the temporarily determined address number is performed (S14). Then, it is determined whether or not the temporarily determined address exists (S15). If no such address exists, the temporary address is assumed to be determined, and the process proceeds to a second stage (S16).

On the other hand, if the temporarily determined address exists at S15, the address number is incremented (S17), and it is determined whether or not the address number is equal to or larger than 128 (S18). If the address number is less than 128, the process returns to S14. If the address number is equal to or larger than 128, the address number is set to 000 (S19). Then, it is determined whether or not the number of times this processing is performed is within a predetermined number of times (S20). If it is less than the predetermined number of times, the process returns to S14, and if it is equal to or larger than the predetermined number of times, it is regarded as a fault, and the processing is terminated (S21).

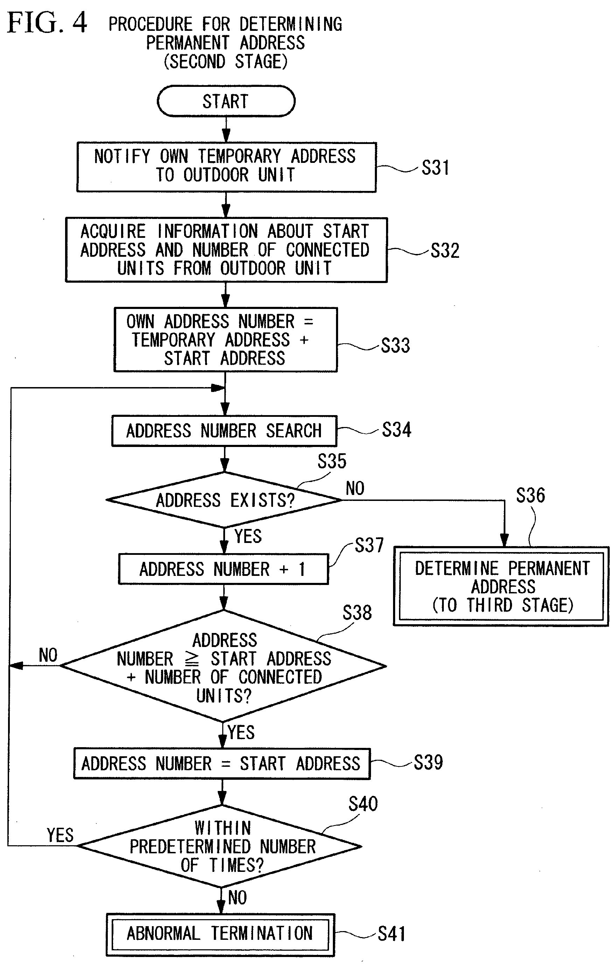

FIG. 4 shows, as a second stage, a procedure for determining a permanent address of each indoor unit.

As shown in FIG. 4, when a temporary address of each indoor unit is determined, each indoor unit notifies its own temporary address to the outdoor unit (S31) and acquires information about the start address and the number of connected units from the outdoor unit (S32).

Next, the sum of the temporary address and the start address is set to its own address number (S33), and a search for the set address number is performed (S34). Then, it is determined whether or not the set address number exists (S35). If the set address number does not exist, the permanent address is assumed to be determined, and the process proceeds to a third stage (S36).

On the other hand, if the set address exists at S35, the address number is incremented (S37), and it is determined whether or not the address number is equal to or larger than the sum of the start address and the number of connected units (S38). If the address number is less than the sum, the process returns to S34. If the address number is equal to or larger than the sum, the address number is set to the start address (S39). Then, it is determined whether or not the number of times this processing is performed is within a predetermined number of times (S40). If it is less than the predetermined number of times, the process returns to S34, and if it is equal to or larger than the predetermined number of times, it is regarded as a fault, and the processing is terminated (S41).

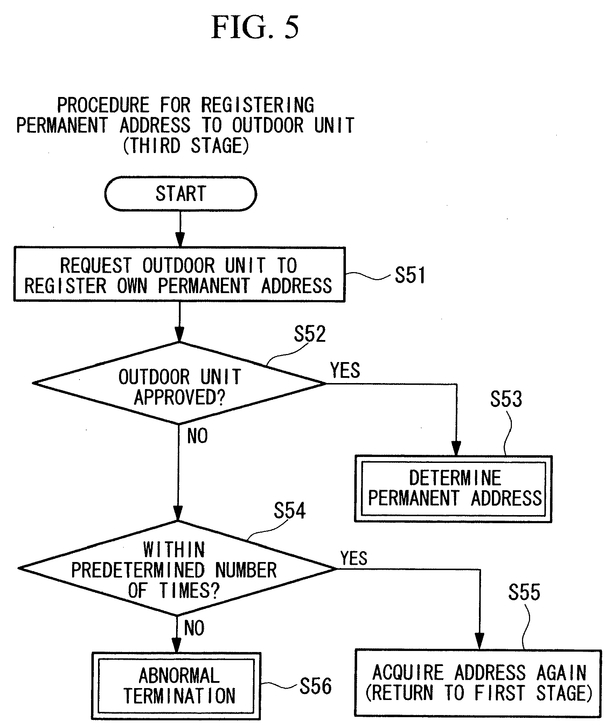

FIG. 5 shows, as a third stage, a procedure for registering the permanent address of each indoor unit to the outdoor unit.

As shown in FIG. 5, when the permanent address of each indoor unit is determined, each indoor unit requests the outdoor unit to register its own permanent address (S51).

Then, if the outdoor unit approves registration of the permanent addresses (S52), the permanent address is registered (S53). If the outdoor unit rejects registration, it is determined whether or not the number of times this processing is performed is within a predetermined number of times (S54). If it is less than the predetermined number of times, the process returns to the first stage, and an address is acquired again (S55), and if it is equal to or larger than the predetermined number of times, it is regarded as a fault, and the processing is terminated (S56).

Through the above-described processing, unique addresses are allocated to all the indoor units.

As has been described above, in the air conditioning system and address setting method according to this embodiment, an address associated with the outdoor unit, for example, "01-11", which is a combination of an outdoor unit number "01" and an indoor unit number "11", is not allocated to each indoor unit, but an unique address independent of the outdoor unit, for example, "001", is allocated to every indoor unit. Thus, the range over which the central control unit 5 searches the addresses of the indoor units can be reduced, and the processing load during a search for a specific indoor unit can be reduced.

Furthermore, by allocating an address starting from the address start code set in the outdoor unit to each indoor unit, the central control unit 5 can easily search for a specific indoor unit.

Moreover, by making the addresses of indoor units serial numbers, the range over which the central control unit 5 searches for the addresses of the indoor units can be further reduced. Thus, the processing load of the central control unit 5 can be further reduced.

In addition, by determining an unique address allocated to each indoor unit on the basis of the address start code and the number of connected indoor units, overlap of the addresses of the indoor units can be prevented.

Herein, the indoor units sequentially acquire addresses from 000 on the basis of the random delay time and temporarily determine such addresses. However, when two or more indoor units recognize the presence of each other due to overlap of the delay time, an unallocated number is generated to avoid that address number. This leads to a case where a permanent address obtained by adding the start address to the temporarily determined address exceeds the maximum number determined by adding the start address and the number of connected units. When exceeding of address numbers occurs, it may be in the address range of another refrigerant system network. Thus, when all the refrigerant system networks are finally connected, overlap of the indoor unit address numbers occurs.

In other words, by instructing the indoor unit that has acquired an address exceeding the sum of the start address and the number of connected units to reacquire an address from the outdoor unit, the above-described overlap of the addresses can be avoided.

Furthermore, by performing the polarity-adjustment processing to make the indoor units, the outdoor units, and the central control unit have the same polarity after the unique addresses are set, the central control unit 5 becomes capable of controlling all the indoor units.

Herein, the network medium uses a communication line formed of two electrical wires and uses a hardware interface having a polarity. Therefore, in a state in which the refrigerant system networks are divided and the communication polarity is determined for each refrigerant system network, if the communication line is connected without turning off the power, controllers having different communication polarities exist in a single large network in a mixed manner.

In contrast, commencement of polarity adjustment processing is instructed to the outdoor unit of one representative refrigerant system network, by manual operation. The outdoor unit having received the instruction to start the polarity adjustment processing switches to the polarity opposite to the currently determined communication circuit polarity and transmits an "opposite polarity indication" notification over the network several times, in a broadcast manner. The controllers having successfully received the "opposite polarity indication" notification have a communication polarity opposite to the communication polarity of the representative refrigerant system network. Therefore, the preset communication circuit polarity is reversed.

This makes controllers constituting the other refrigerant system networks conform to the communication polarity of the representative refrigerant system network. Thus, all the controllers connected to the network, consisting of a plurality of refrigerant systems, have the same communication polarity.

Note that it is possible to set the address start code and the number of connected indoor units by providing the outdoor unit with a rotary switch and operating the rotary switch. This makes it possible to confirm the setting even when the outdoor unit is not activated, improving the working efficiency during maintenance.

## Claims

1. An air conditioning system (100) comprising:
a plurality of air conditioners (18, 28, 38) each including an outdoor unit (1, 2, 3) and at least one indoor unit (11-13, 21-23, 31-33) connected to the outdoor unit (1, 2, 3) through a refrigerant pipe; and
a central control unit (5) capable of centrally controlling all the indoor units (11-13, 21-23, 31-33) of the plurality of the air conditioners (18, 28, 38),
**characterized in that**
the air conditioning system (100) is configured so that in each outdoor unit (1, 2, 3) an address start code, which is given to the indoor units (11-13, 21-23, 31-33) connected to the outdoor unit (1, 2 , 3), and the number of indoor units (11-13, 21-23, 31-33) connected to the outdoor unit (1, 2, 3) are set,
wherein the address start codes are non-overlapping codes, and
wherein unique addresses, each of which starts with the address start code that is set in the outdoor unit (1, 2, 3), are allocated to all the indoor units (11-13, 21-23, 31-33) controlled by the central control unit (5) in accordance to a certain rule.

2. The air conditioning system (100) according to claim 1,
wherein the unique address is determined on the basis of the address start code and the number of connected units.

3. The air conditioning system (100) according to any one of claims 1 to 2,
wherein the unique address is a serial number.

4. The air conditioning system (100) according to any one of claims 1 to 3,
wherein polarity-adjustment processing is performed on the indoor unit (11-13, 21-23, 31-33), the outdoor unit (1, 2, 3), and the central control unit (5) after the unique addresses are set.

5. An address setting method for setting addresses of indoor units (11-13, 21-23, 31-33) in an air conditioning system (100) that controls a plurality of indoor units (11-13, 21-23, 31-33) connected to each of a plurality of outdoor units (1, 2, 3) with a common central control unit (5),
wherein in that unique addresses are set in all the indoor units (11-13, 21-23, 31-33) controlled by the common central control unit (5),
**characterized in that**
in each outdoor unit (1, 2, 3) an address start code, which is given to the indoor units (11-13, 21-23, 31-33) connected to the outdoor unit (1, 2 , 3), and the number of indoor units (11-13, 21-23, 31-33) connected to the outdoor unit (1, 2, 3) are set,
wherein the address start codes are non-overlapping codes, and
wherein unique addresses, each of which starts with the address start code that is set in the outdoor unit (1, 2, 3), are allocated to all the indoor units (11-13, 21-23, 31-33) in accordance to a certain rule.

## Patentansprüche

1. Klimatisierungssystem (100), umfassend:
mehrere Klimageräte (18, 28, 38) die jeweils eine Außeneinheit (1, 2, 3) und mindestens eine Inneneinheit (11-13, 21-23, 31-33), die mit der Außeneinheit (1, 2, 3) durch ein Kältemittelrohr verbunden ist, enthalten, und
eine zentrale Steuereinheit (5), die in der Lage ist, alle Inneneinheiten (11-13, 21-23, 31-33) der mehreren Klimageräte (18, 28, 38) zentral zu steuern,
**dadurch gekennzeichnet, dass**
das Klimatisierungssystem (100) so konfiguriert ist, dass in jeder Außeneinheit (1, 2, 3) ein Adressenstartcode, der an die Inneneinheiten (11-13, 21-23, 31-33) vergeben wird, die mit der Außeneinheit (1, 2, 3) verbunden sind, und die Anzahl der Inneneinheiten (11-13, 21-23, 31-33), die mit der Außeneinheit (1,2,3) verbunden sind, eingestellt werden,
wobei die Adressenstartcodes nicht-überlappende Codes sind, und
wobei eindeutige Adressen, von denen jede mit dem Adressenstartcode, der in der Außeneinheit (1, 2, 3) eingestellt ist, beginnt, allen durch die zentrale Steuereinheit (5) gesteuerten Inneneinheiten (11-13, 21-23, 31-33) gemäß einer bestimmten Regel zugewiesen werden.

2. Klimatisierungssystem (100) nach Anspruch 1,
wobei die eindeutige Adresse auf der Basis des Adressenstartcodes und der Anzahl der verbundenen Einheiten bestimmt wird.

3. Klimatisierungssystem (100) nach einem der Ansprüche 1 bis 2,
wobei die eindeutige Adresse eine laufende Nummer ist.

4. Klimatisierungssystem (100) nach einem der Ansprüche 1 bis 3,
wobei eine Polaritätsjustierungsverarbeitung an der Inneneinheit (11-13, 21-23, 31-33), der Außeneinheit (1, 2, 3) und der zentralen Steuereinheit (5) ausgeführt wird, nachdem die eindeutigen Adressen eingestellt wurden.

5. Adresseneinstellverfahren zum Einstellen von Adressen von Inneneinheiten (11-13, 21-23, 31-33) in einem Klimatisierungssystem (100), das mehrere Inneneinheiten (11-13, 21-23, 31-33), die mit jeder von mehreren Außeneinheiten (1, 2, 3) verbunden sind, mit einer gemeinsamen zentralen Steuereinheit (5) steuert,
wobei eindeutige Adressen in allen Inneneinheiten (11-13, 21-23, 31-33), die durch die gemeinsame zentrale Steuereinheit (5) gesteuert werden, eingestellt werden,
**dadurch gekennzeichnet, dass**
in jeder Außeneinheit (1, 2, 3) ein Adressenstartcode, der an die Inneneinheiten (11-13, 21-23, 31-33) vergeben wird, die mit der Außeneinheit (1, 2, 3) verbunden sind, und die Anzahl der Inneneinheiten (11-13, 21-23, 31-33), die mit der Außeneinheit (1, 2, 3) verbunden sind, eingestellt werden,
wobei die Adressenstartcodes nicht-überlappende Codes sind, und
wobei eindeutige Adressen, von denen jede mit dem Adressenstartcode, der in der Außeneinheit (1, 2, 3) eingestellt ist, beginnt, allen durch die zentrale Steuereinheit (5) gesteuerten Inneneinheiten (11-13, 21-23, 31-33) gemäß einer bestimmten Regel zugewiesen werden.

## Revendications

1. Système de climatisation (100) comportant :
une pluralité de climatiseurs (18, 28, 38) comprenant chacun une unité extérieure (1, 2, 3) et au moins une unité intérieure (11 à 13, 21 à 23, 31 à 33) reliée à l'unité extérieure (1, 2, 3) par l'intermédiaire d'un tuyau de réfrigérant ; et
une unité de commande centrale (5) capable de commander de manière centrale toutes les unités intérieures (11 à 13, 21 à 23, 31 à 33) de la pluralité de climatiseurs (18, 28, 38),
**caractérisé en ce que**
le système de climatisation (100) est configuré de telle sorte que, dans chaque unité extérieure (1, 2, 3), un code de début d'adresse, qui est donné aux unités intérieures (11 à 13, 21 à 23, 31 à 33) reliées à l'unité extérieure (1, 2, 3), et le nombre d'unités intérieures (11 à 13, 21 à 23, 31 à 33) reliées à l'unité extérieure (1, 2, 3) sont établis,
dans lequel les codes de début d'adresse sont des codes qui ne se chevauchent pas, et
dans lequel des adresses uniques, dont chacune commence par le code de début d'adresse qui est établi dans l'unité extérieure (1, 2, 3), sont assignées à toutes les unités intérieures (11 à 13, 21 à 23, 31 à 33) commandées par l'unité de commande centrale (5) selon une certaine règle.

2. Système de climatisation (100) selon la revendication 1, dans lequel l'adresse unique est déterminée sur la base du code de début d'adresse et du nombre d'unités reliées.

3. Système de climatisation (100) selon l'une quelconque des revendications 1 à 2, dans lequel l'adresse unique est un numéro de série.

4. Système de climatisation (100) selon l'une quelconque des revendications 1 à 3, dans lequel un traitement d'ajustement de polarité est réalisé sur l'unité intérieure (11 à 13, 21 à 23, 31 à 33), l'unité extérieure (1, 2, 3), et l'unité de commande centrale (5) une fois que les adresses uniques sont établies.

5. Procédé d'établissement d'adresse destiné à établir des adresses d'unités intérieures (11 à 13, 21 à 23, 31 à 33) dans un système de climatisation (100) qui commande une pluralité d'unités intérieures (11 à 13, 21 à 23, 31 à 33) reliées à chacune d'une pluralité d'unités extérieures (1, 2, 3) avec une unité de commande centrale commune (5),
selon lequel des adresses uniques sont établies dans toutes les unités intérieures (11 à 13, 21 à 23, 31 à 33) commandées par l'unité de commande centrale commune (5),
**caractérisé en ce que**
dans chaque unité extérieure (1, 2, 3), un code de début d'adresse, qui est donné aux unités intérieures (11 à 13, 21 à 23, 31 à 33) reliées à l'unité extérieure (1, 2, 3), et le nombre d'unités intérieures (11 à 13, 21 à 23, 31 à 33) reliées à l'unité extérieure (1, 2, 3) sont établis,
selon lequel les codes de début d'adresse sont des codes qui ne se chevauchent pas, et
selon lequel des adresses uniques, dont chacune commence par le code de début d'adresse qui est établi dans l'unité extérieure (1, 2, 3), sont assignées à toutes les unités intérieures (11 à 13, 21 à 23, 31 à 33) selon une certaine règle.
